# EUROPÄISCHE PATENTSCHRIFT

(11) **EP 1 681 370 B1**
(45) Veröffentlichungstag und Bekanntmachung des Hinweises auf die Patenterteilung: **16.12.2009**
(21) Anmeldenummer: 06002169.8
(22) Anmeldetag: 09.07.2003
(51) Int. Cl.: C23C 18/12, C01G 23/047, C03C 17/25, B01J 35/00

(54) **Verfahren zur Herstellung von photokatalytisch aktiven TiO2-Teilchen und von Substraten mit photokatalytischer TiO2-Schicht**
Process for producing photocatalytically active TiO2 particles and substrates with photocatalytic TiO2 layer
Procédé de fabrication de particules TiO2 photocatalytiquement actives et de substrats avec couche TiO2 photocatalytique

(30) Priorität: 09.07.2002 DE 10230928; 05.08.2002 DE 10235803
(43) Veröffentlichungstag der Anmeldung: 19.07.2006
(62) Teilanmeldung aus: 03762677.7
(73) Patentinhaber: Leibniz-Institut für Neue Materialien gemeinnützige GmbH, 66123 Saarbrücken (DE)
(72) Erfinder: Akarsu, Murat, 66111 Saarbrücken (DE); Arpac, Ertugrul, 07200 Antalya (TR); Schmidt, Helmut, 66130 Saarbrücken-Güdingen (DE)
(74) Vertreter: Köllner, Malte

(56) Entgegenhaltungen:
- EP-A- 1 016 458
- EP-A- 1 136 125
- FR-A- 2 738 836
- US-A- 6 037 289
- LIN H ET AL: "PREPARATION OF TIO2 FILMS ON SELF-ASSEMBLED MONOLAYERS BY SOL-GEL METHOD" THIN SOLID FILMS, ELSEVIER-SEQUOIA S.A. LAUSANNE, CH, Bd. 315, Nr. 1/2, 2. März 1998 (1998-03-02), Seiten 111-117, XP000668632 ISSN: 0040-6090

## Beschreibung

Die Erfindung betrifft photokatalytisch aktive TiO₂-Teilchen, Substrate mit einer photokatalytischen, TiO₂ enthaltenden Schicht, Verfahren zu ihrer Herstellung und deren Verwendung.

Die photokatalytischen Eigenschaften von TiO₂-Partikeln sind in der Literatur seit langem bekannt und intensiv untersucht worden. Der photokatalytische Effekt beruht auf einer Halbleitereigenschaft des TiO₂, wobei durch ein Lichtquant ein Loch-Elektron-Paar gebildet wird, das eine relativ lange Rekombinationszeit aufweist. Durch Diffusion von Löchern und Elektronen an die Oberfläche werden Prozesse in Gang gesetzt, die unmittelbar oder mittelbar über Wasser mit anschließender Wasserstoffperoxidbildung eine stark oxidative Wirkung entwickeln. Dabei ist das Oxidationspotenzial mit über 3 eV so hoch, dass praktisch alle organischen Substanzen, die in Berührung mit solchen TiO₂-Partikeln kommen, oxidiert werden. Dieser Prozess läuft jedoch nur ab, wenn ein merklicher UV-Lichtanteil im aufgestrahlten Licht enthalten ist. Da der Anteil des UV-Lichtes am sichtbaren Licht relativ klein ist, ist die photokatalytische Wirkung durch die einfallenden Lichtquanten begrenzt. Durch die Rekombination der Elektronen mit den Löchern wird die Effizienz weiterhin erniedrigt.

Ferner hat sich gezeigt, dass es schwierig ist, auf Substraten oder Oberflächenschichten, die selbst oxidierbar sind, wie z. B. bei Substraten oder Schichten aus organischen Polymeren, eine Oxidation durch eine darauf aufgebrachte photokatalytische Schicht und damit die Schädigung des Substrates oder der Schicht zu verhindern. Auch bei Substraten oder Oberflächenschichten aus Glas hat eine unmittelbare Aufbringung der photokatalytischen Schicht den Nachteil, dass im Glas befindliche Natriumionen in die photokatalytische Schicht diffundieren können, wodurch das Glas geschädigt und/oder der photokatalytische Prozess gestört werden.

Die Aufgabe der vorliegenden Erfindung bestand deshalb darin, eine gesteigerte photokatalytische Aktivität zu erreichen und/oder für Substrate oder Oberflächenschichten, die gegenüber der photokatalytischen Schicht empfindlich sind, einen Schutz bereitzustellen.

Nach einer ersten Ausführungsform der vorliegenden Erfindung wird ein Verfahren zur Herstellung eines Substrats mit einer photokatalytischen Schicht bereitgestellt, das folgende Schritte umfasst:
a) Herstellen einer Mischung umfassend mindestens eine hydrolysierbare Titanverbindung, ein organisches Lösungsmittel und Wasser in einer unterstöchiometrischen Menge, bezogen auf die hydrolysierbaren Gruppen der Titanverbindung,
b) Behandeln der sich ergebenden Mischung bei einer Temperatur von mindestens 60°C unter Bildung einer Dispersion oder eines Niederschlags von dotierten TiO₂-Teilchen,
c) gegebenenfalls Lösungsmittelaustausch durch Entfernen des Lösungsmittels unter Bildung eines Pulvers von TiO₂-Teilchen und Zugabe eines anderen Lösungsmittels unter Bildung einer Dispersion von TiO₂-Teilchen,
d) Auftragen der Dispersion auf das Substrat und
e) Wärmebehandlung der aufgetragenen Dispersion unter Bildung einer photokatalytischen Schicht.

Nach der Erfindung wird damit ein Verfahren zur Herstellung von TiO₂-Teilchen bereitgestellt, das neben den vorgenannten Schritten a) und b) den Schritt c) der Entfernung des Lösungsmittels unter Bildung eines Pulvers von TiO₂-Teilchen umfasst.

In bevorzugten Ausführungsformen wird bei den Verfahren zur Herstellung der TiO₂₋Teilchen bzw. zur Herstellung des Substrats mit photokatalytischer Schicht in Schritt a) zusätzlich mindestens ein Dotiermittel zugegeben und/oder in Schritt b) erfolgt eine hydrothermale Behandlung oder Erwärmung unter Rückfluss.

Das Substrat, das mit der photokatalytischen Schicht zu versehen ist, kann aus jedem für diesen Zweck geeigneten Material sein. Beispiele für geeignete Materialien sind Metalle oder Metalllegierungen, Glas, Keramik, einschließlich Oxidkeramik, Glaskeramik oder Kunststoffe. Selbstverständlich sind auch Substrate verwendbar, die eine Oberflächenschicht aus den vorstehend genannten Materialien aufweisen. Bei der Oberflächenschicht kann es sich z.B. um eine Metallisierung, eine Emaillierung, eine Glas- oder Keramikschicht oder eine Lackierung handeln.

Beispiele für Metalle oder Metalllegierungen sind Stahl, einschließlich Edelstahl, Chrom, Kupfer, Titan, Zinn, Zink, Messing und Aluminium. Beispiele für Glas sind Natronkalkglas, Borosilicatglas, Bleikristall und Kieselglas. Es kann sich z.B. um Flachglas, Hohlglas wie Behälterglas, oder um Laborgeräteglas handeln. Bei der Keramik handelt es sich z.B. um eine Keramik auf Basis der Oxide SiO₂, Al₂O₃, ZrO₂ oder MgO oder der entsprechenden Mischoxide. Beispiele für den Kunststoff, der, wie auch das Metall, als Folie vorliegen kann, sind Polyethylen, z.B. HDPE oder LDPE, Polypropylen, Polyisobutylen, Polystyrol, Polyvinylchlorid, Polyvinylidenchlorid, Polyvinylbutyral, Polytetrafluorethylen, Polychlortrifluorethylen, Polyacrylate, Polymethacrylate wie Polymethylmethacrylat, Polyamid, Polyethylenterephthalat, Polycarbonat, regenerierte Cellulose, Cellulosenitrat, Celluloseacetat, Cellulosetriacetat (TAC), Celluloseacetatbutyrat oder Kautschuk-Hydrochlorid. Eine lackierte Oberfläche kann aus üblichen Grundanstrichen oder Lacken gebildet sein.

Zur Herstellung einer photokatalytischen Schicht auf dem Substrat wird nach der ersten erfindungsgemäßen Ausführungsform entsprechend dem später erläuterten Sol-Gel-Verfahren eine TiO₂-Teilchen enthaltende Dispersion hergestellt. Die TiO₂₋Teilchen können auch unter Bildung eines Niederschlags ausfallen. Durch Entfernung des Lösungsmittels wird ein Pulver erhalten.

Nach den Verfahren der ersten erfindungsgemäßen Ausführungsform wird zunächst gemäß Schritt a) eine Mischung umfassend mindestens eine hydrolysierbare Titanverbindung, ein organisches Lösungsmittel und Wasser in einer unterstöchiometrischen Menge, bezogen auf die hydrolysierbaren Gruppen der Titanverbindung, hergestellt, wobei die Mischung auch gegebenenfalls mindestens eine Metallverbindung als Dotiermittel umfassen kann.

Bei der hydrolysierbaren Titanverbindung handelt es sich insbesondere um eine Verbindung der Formel TiX₄, wobei die hydrolysierbaren Gruppen X, die verschieden voneinander oder vorzugsweise gleich sind, beispielsweise Wasserstoff, Halogen (F, Cl, Br oder I, insbesondere Cl und Br), Alkoxy (vorzugsweise C₁₋₆-Alkoxy, insbesondere C₁₋₄-Alkoxy, wie z.B. Methoxy, Ethoxy, n-Propoxy, i-Propoxy, Butoxy, i-Butoxy, sek.-Butoxy und tert.-Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy) oder Alkylcarbonyl (vorzugsweise C₂₋₇-Alkylcarbonyl, wie z.B. Acetyl) sind. Ein Beispiel für ein Halogenid ist TiCl₄. Bevorzugte hydrolysierbare Reste X sind Alkoxygruppen, insbesondere C₁₋₄-Alkoxy. Konkrete und bevorzugt eingesetzte Titanate sind Ti(OCH₃)₄, Ti(OC₂H₅)₄ und Ti(n- oder i-OC₃H₇)₄.

Die Mischung enthält auch Wasser in einer unterstöchiometrischen Menge, bezogen auf die hydrolysierbaren Gruppen der Titanverbindung, d.h. bezogen auf 1 Mol hydrolysierbarer Gruppen in der Titanverbindung sind weniger als ein Mol Wasser vorhanden. Anders ausgedrückt werden bei einer hydrolysierbaren Titanverbindung mit 4 hydrolysierbaren Gruppen, bezogen auf 1 Mol Titanverbindung, weniger als 4 Mol Wasser zugegeben. Bevorzugt werden nicht mehr als 0,7 Mol, bevorzugter nicht mehr als 0,6 Mol und insbesondere nicht mehr als 0,5 Mol oder 0,4 Mol, und nicht weniger als 0,35 Mol, bevorzugter nicht weniger als 0,30 Mol Wasser, bezogen auf 1 Mol hydrolysierbarer Gruppen in der Titanverbindung, verwendet.

Bei den bevorzugten Ausführungsformen zur Herstellung dotierter Teilchen kann als Metallverbindung zur Dotierung jede geeignete Metallverbindung eingesetzt werden, z.B. ein Oxid, ein Salz oder eine Komplexverbindung, z.B. Halogenide, Nitrate, Sulfate, Carboxylate (z.B. Acetate) oder Acetylacetonate. Die Verbindung sollte in dem für die Mischung verwendeten Lösungsmittel zweckmäßigerweise löslich sein. Als Metall eignet sich jedes Metall, insbesondere ein Metall ausgewählt aus der 5. bis 14. Gruppe des Periodensystems der Elemente und der Lanthanoiden und Actiniden. Die Gruppen werden hier entsprechend dem neuen IUPAC-System aufgeführt, wie es in Römpp Chemie Lexikon, 9. Auflage, wiedergegeben ist. Das Metall kann in der Verbindung in jeder geeigneten Oxidationsvorstufe vorkommen.

Nach dem neuen IUPAC System entsprechen die Gruppen 1, 2 und 13 bis 18 den 8 Hauptgruppen (IA bis VIIIA nach CAS), die Gruppen 3 bis 7 den Nebengruppen 3 bis 7 (IIIB bis VIIB nach CAS), die Gruppen 8 bis 10 der Nebengruppe 8 (VIII nach CAS) und die Gruppen 11 und 12 den Nebengruppen 1 und 2 (Cu- und Zn-Gruppe, IB und IIB nach CAS).

Beispiele für geeignete Metalle für die Metallverbindung sind W, Mo, Cr, Zn, Cu, Ag, Au, Sn, In, Fe, Co, Ni, Mn, Ru, V, Nb, Ir, Rh, Os, Pd und Pt. Metallverbindungen von W(VI), Mo(VI), Cr(III), Zn(II), Cu(II), Au(III), Sn(IV), In(III), Fe(III), Co(II), V(V) und Pt(IV) werden bevorzugt verwendet. Sehr gute Ergebnisse werden insbesondere mit W(VI), Mo(VI), Zn(II), Cu(II), Sn(IV), In(III) und Fe(III) erreicht. Konkrete Beispiele für bevorzugte Metallverbindungen sind WO₃ MoO₃, FeCl₃, Silberacetat, Zinkchlorid, Kupfer(II)-chlorid, Indium(III)-oxid und Zinn(IV)-acetat.

Das Mengenverhältnis zwischen der Metallverbindung und der Titanverbindung hängt auch von dem eingesetzten Metall und dessen Oxidationsstufe ab. Im allgemeinen werden z.B. solche Mengenverhältnisse eingesetzt, dass sich ein Molverhältnis von Metall der Metallverbindung zu Titan der Titanverbindung (Me/Ti) von 0,0005:1 bis 0,2:1, bevorzugt 0,001:1 bis 0,1:1 und bevorzugter 0,005:1 bis 0,1:1 ergibt.

Anstelle der Metalldotierung kann auch eine Dotierung mit Halbmetall- oder Nichtmetallelementen durchgeführt werden, z.B. mit Kohlenstoff, Stickstoff, Phosphor, Schwefel, Bor, Arsen, Antimon, Selen, Tellur, Chlor, Brom und/oder lod. Zu diesem Zweck werden entweder die Elemente als solche oder geeignete Elementverbindungen als Dotiermittel eingesetzt.

Die dotierten TiO₂-Teilchen zeichnen sich insbesondere dadurch aus, dass sie bei geeigneter Wahl des Dotierungselements und der Prozessführung photokatalytische Aktivität auch bei einer Anregung mit sichtbarem Licht einer Wellenlänge > 380 nm aufweisen ("Visible-light oder Tageslicht-Photokatalysatoren").

Als Lösungsmittel wird ein organisches Lösungsmittel verwendet, in dem die hydrolysierbare Titanverbindung vorzugsweise löslich ist. Das Lösungsmittel ist ferner vorzugsweise mit Wasser mischbar. Beispiele für geeignete organische Lösungsmittel sind unter anderem Alkohole, Ketone, Ether, Amide und deren Gemische. Bevorzugt werden Alkohole verwendet, vorzugsweise niedere aliphatische Alkohole (C₁-C₆-Alkohole), wie Ethanol, 1-Propanol, i-Propanol, sek.-Butanol, tert.-Butanol, Isobutylalkohol, n-Butanol und die Pentanol-Isomeren, insbesondere 1-Pentanol, wobei 1-Propanol und 1-Pentanol besonders bevorzugt sind.

Die Mischung enthält bevorzugt einen Katalysator für die Hydrolyse und Kondensation unter Sol-Gel-Bedingungen, insbesondere einen sauren Kondensationskatalysator, z.B. Salzsäure, Phosphorsäure oder Ameisensäure.

Die sich ergebenden Mischung wird dann bei einer Temperatur von mindestens 60°C unter Bildung einer Dispersion oder eines Niederschlags von dotierten oder undotierten TiO₂-Teilchen behandelt. Diese Wärmebehandlung erfolgt vorzugsweise hydrothermal oder durch Erwärmen unter Rückfluss. Zweckmäßigerweise wird bei der Wärmebehandlung eine relativ hohe Verdünnung angewandt, insbesondere beim Erwärmen unter Rückfluss.

Die Wärmebehandlung erfolgt vorzugsweise über einen Zeitraum von 0,5 bis 30 h, bevorzugt 4 bis 24 h, wobei die Dauer von der Temperatur und dem gegebenenfalls angelegten Druck abhängt. Beispielsweise erhält man Anatas durch Hydrothermal-behandlung bei 200°C und autogenem Druck nach einer Reaktionsdauer von 1 h in nanopartikulärer Form in einer Ausbeute von ca. 35% d.Th.

Das Erwärmen unter Rückfluss erfolgt üblicherweise über einen Zeitraum von mindestens 3 h. Als Lösungsmittel werden vorzugsweise Alkohole mit mindestens 4, vorzugsweise mindestens 5 C-Atomen verwendet, beispielsweise n-Pentanol, Hexanol, Heptanol oder Octanol. Es können aber auch andere polare Lösungsmittel angewandt werden, z.B. Thiole wie n-Butyl-, Amyl-, Hexyl oder Heptylmercaptan.

Unter einer Hydrothermal-Behandlung versteht man im allgemeinen eine Wärmebehandlung einer wässrigen Lösung oder Suspension unter Überdruck, z.B bei einer Temperatur über dem Siedepunkt des Lösungsmittels und einem Druck über 1 bar. In der vorliegenden Erfindung wird auch eine Wärmebehandlung in einem überwiegend organischen Lösungsmittel, das wenn überhaupt nur wenig Wasser enthält, unter Überdruck als hydrothermale Behandlung verstanden.

Bei der hydrothermalen Behandlung wird die Mischung in einem geschlossenen Behälter oder einem geschlossenen Autoklaven wärmebehandelt. Die Behandlung erfolgt vorzugsweise bei einer Temperatur im Bereich von 75°C bis 300°C, vorzugsweise über 200°C, bevorzugter 225 bis 275°C, z.B. etwa 250°C. Durch die Erwärmung, insbesondere über den Siedepunkt des Lösungsmittels, wird in dem geschlossenen Behälter oder Autoklaven ein Druck aufgebaut (autogener Druck). Der erhaltene Druck kann z.B. über 1 bar, insbesondere 50 bis 500 bar oder mehr, vorzugsweise 100 bis 300 bar, z.B. 200 bar, betragen. In der Regel erfolgt die Hydrothermalbehandlung mindestens 0,5 h und bevorzugt bis zu 7 oder 8 h.

Die Wärmebehandlung gemäß Schritt b) wird solange durchgeführt, bis die gewünschten dotierten oder undotierten TiO₂-Teilchen gebildet sind. Die Dispersion oder der Niederschlag kann direkt oder nach Lösungsmittelaustausch für die Beschichtung des Substrats verwendet werden. Um TiO₂-Teilchen in Pulverform zu erhalten, wird das Lösungsmittel entfernt.

Die erhaltenen dotierten oder undotierten TiO₂-Teilchen der Dispersion, des Niederschlags oder des Pulvers liegen überwiegend kristallin in der Anatas-Form vor. Vorzugsweise macht der kristalline Anteil der erhaltenen dotierten TiO₂-Teilchen mehr als 90%, bevorzugt mehr als 95% und insbesondere mehr als 97% aus, d.h. der amorphe Anteil liegt insbesondere unter 3%, z.B. bei 2%. Die mittlere Teilchengröße (röntgenographisch ermitteltes Volumenmittel) beträgt vorzugsweise nicht mehr als 20 nm, bevorzugter nicht mehr als 10 nm. In einer besonders bevorzugten Ausführungsform werden Teilchen mit einer mittleren Teilchengröße von etwa 2 bis 10 nm erhalten. Die erfindungsgemäß hergestellten TiO₂-Teilchen zeichnen sich gegenüber bekannten TiO₂-Materialien dadurch aus, dass sie agglomeratfrei dispergierbar sind. Bei der Dotierung der TiO₂-Teilchen wird eine besonders homogene Verteilung der Dotierungsmetalle erhalten.

Die erhaltene Dispersion kann als solches zur Beschichtung des Substrats verwendet werden. Zweckmäßigerweise erfolgt vorher ein Lösungsmittelaustausch. Dabei ist es bevorzugt, dass aus der in Schritt b) erhaltenen Dispersion die Teilchen vom Lösungsmittel abgetrennt werden. Hierfür können alle dem Fachmann bekannten Verfahren verwendet werden. Eine Zentrifugation ist besonders geeignet. Die abgetrennten TiO₂-Teilchen werden dann getrocknet (z.B. bei 40°C und 10 mbar). In dieser Form können die Teilchen auch gut gelagert werden.

Für die Aufbringung auf das Substrat werden die TiO₂-Teilchen erneut in einem Lösungsmittel dispergiert. Hierfür eignen sich z.B. die oben aufgeführten Lösungsmittel oder Wasser. Bevorzugt wird eine Wasser/Alkohol-Mischung und besonders bevorzugt Wasser allein als Lösungsmittel verwendet.

In einer bevorzugten Ausführungsform wird zu der nach Schritt b) oder c) erhaltenen Dispersion ein anorganisches oder organisch modifiziertes anorganisches matrixbildendes Material gegeben. Hierbei kann es sich insbesondere um anorganische Sole oder organisch modifizierte anorganische Hybridmaterialien oder Nanokomposite handeln. Beispiele hierfür sind gegebenenfalls organisch modifizierte Oxide, Hydrolysate und (Poly)Kondensate von mindestens einem glas- oder keramikbildenden Element M, insbesondere einem Element M aus den Gruppen 3 bis 5 und/oder 12 bis 15 des Periodensystems der Elemente, bevorzugt von Si, Al, B, Ge, Pb, Sn, Ti, Zr, V und Zn, insbesondere solche von Si und AI, am meisten bevorzugt Si, oder Mischungen davon. Es können auch anteilig Elemente der Gruppen 1 und 2 des Periodensystems (z.B. Na, K, Ca und Mg) und der Gruppen 5 bis 10 des Periodensystems (z.B. Mn, Cr, Fe und Ni) oder Lanthanoiden im Oxid, Hydrolysat oder (Poly)Kondensat vorhanden sein. Ein bevorzugtes organisch modifiziertes anorganisches Hybridmaterial sind Polyorganosiloxane. Besonders bevorzugt werden hierfür Hydrolysate von glas- oder keramikbildenden Elementen, insbesondere von Silicium verwendet.

Das anorganische oder organisch-modifizierte anorganische matrixbildende Material wird bevorzugt in einer solchen Menge zugegeben, dass das Molverhältnis von Titan der Titanverbindung zu glas- oder keramikbildendem Element M 100:0,01 bis 0,01:100, vorzugsweise 300:1 bis 1:300 beträgt. Sehr gute Ergebnisse werden bei einem Molverhältnis Ti/M von etwa 10:3 bis 1:30 erhalten. Durch diese Zugabe wird eine Verbesserung der Haftung erreicht. Sofern ein organisch-modifiziertes anorganisches matrixbildendes Material verwendet wird, können alle oder nur ein Teil der enthaltenen glas- oder keramikbildenden Elemente M eine oder mehrere organische Gruppen als nicht hydrolysierbare Gruppen aufweisen.

Die anorganischen oder organisch modifizierten anorganischen matrixbildenden Materialien können nach bekannten Verfahren hergestellt werden, z.B. durch Flammpyrolyse, Plasmaverfahren, Gasphasenkondensationsverfahren, Kolloidtechniken, Präzipitationsverfahren, Sol-Gel-Verfahren, kontrollierte Nukleations- und Wachstumsprozesse, MOCVD-Verfahren und (Mikro)emulsionsverfahren. Sofern aus dem Verfahren lösungsmittelfreie Teilchen erhalten werden, werden diese geeigneterweise in einem Lösungsmittel dispergiert.

Vorzugsweise werden die anorganischen Sole und insbesondere die organisch-modifizierten Hybridmaterialien nach dem Sol-Gel-Verfahren erhalten. Beim Sol-Gel-Verfahren, das auch zur gesonderten Herstellung der Teilchen verwendet werden kann, werden gewöhnlich hydrolysierbare Verbindungen mit Wasser, gegebenenfalls unter saurer oder basischer Katalyse, hydrolysiert und gegebenenfalls zumindest teilweise kondensiert. Die Hydrolyse- und/oder Kondensationsreaktionen führen zur Bildung von Verbindungen oder Kondensaten mit Hydroxy-, Oxogruppen und/oder Oxobrücken, die als Vorstufen dienen. Es können stöchiometrische Wassermengen, aber auch geringere oder größere Mengen verwendet werden. Das sich bildende Sol kann durch geeignete Parameter, z.B. Kondensationsgrad, Lösungsmittel oder pH-Wert, auf die für die Beschichtungszusammensetzung gewünschte Viskosität eingestellt werden. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Nach dem bevorzugten Sol-Gel-Verfahren werden die Oxide, Hydrolysate oder (Poly)Kondensate durch Hydrolyse und/oder Kondensation aus hydrolysierbaren Verbindungen der oben genannten glas- oder keramikbildenden Elemente erhalten, die gegebenenfalls zur Herstellung des organisch-modifizierten anorganischen Hybridmaterials zusätzlich nicht hydrolysierbare organische Substituenten tragen.

Anorganische Sole werden dabei nach dem Sol-Gel-Verfahren insbesondere aus hydrolysierbaren Verbindungen der allgemeine Formeln MXₙ gebildet, worin M das vorstehend definierte glas- oder keramikbildende Element ist, X wie in nachstehender Formel (I) definiert ist, wobei zwei Gruppen X durch eine Oxogruppe ersetzt sein können, und n der Wertigkeit des Elements entspricht und meist 3 oder 4 ist. Bevorzugt handelt es sich um hydrolysierbare Si-Verbindungen, insbesondere der nachstehenden Formel (I).

Beispiele für einsetzbare hydrolysierbare Verbindungen von Elementen M, die von Si verschieden sind, sind Al(OCH₃)₃, Al(OC₂H₅)₃, Al(O-n-C₃H₇)₃, Al(O-i-C₃H₇)₃, Al(O-n-C₄H₉)₃, Al(O-sek.-C₄H₉)₃, AlCl₃, AlCl(OH)₂, Al(OC₂H₄OC₄H₉)₃, TiCl₄, Ti(OC₂H₅)₄, Ti(O-n-C₃H₇)₄, Ti(O-i-C₃H₇)₄, Ti(OC₄H₉)₄, Ti(2-ethylhexoxy)₄, ZrCl₄, Zr(OC₂H₅)₄, Zr(O-n-C₃H₇)₄, Zr(O-i-C₃H₇)₄, Zr(OC₄H₉)₄, ZrOCl₂, Zr(2-ethylhexoxy)₄, sowie Zr-Verbindungen, die komplexierende Reste aufweisen, wie z.B. β-Diketon- und (Meth)acrylreste, Natriummethylat, Kaliumacetat, Borsäure, BCl₃, B(OCH₃)₃, B(OC₂H₅)₃, SnCl₄, Sn(OCH₃)₄, Sn(OC₂H₅)₄, VOCl₃ und VO(OCH₃)₃.

Die nachstehenden Ausführungen zum bevorzugten Silicium gelten auch sinngemäß für die anderen Elemente M. Besonders bevorzugt wird das Sol oder das organisch-modifizierte anorganische Hybridmaterial aus einem oder mehreren hydrolysierbaren und kondensierbaren Silanen erhalten, wobei gegebenenfalls mindestens ein Silan einen nicht hydrolysierbaren organischen Rest aufweist. Besonders bevorzugt werden ein oder mehrere Silane mit den folgenden allgemeinen Formeln (I) und/oder (II) verwendet:

SiX₄ (I)

worin die Reste X gleich oder verschieden sind und hydrolysierbare Gruppen oder Hydroxygruppen bedeuten,

RₐSiX₍₄₋ₐ₎ (II)

worin R gleich oder verschieden ist und einen nicht hydrolysierbaren Rest darstellt, der gegebenenfalls eine funktionelle Gruppe aufweist, X die vorstehende Bedeutung hat und a den Wert 1, 2 oder 3, vorzugsweise 1 oder 2, hat.

In den obigen Formeln sind die hydrolysierbaren Gruppen X beispielsweise Wasserstoff oder Halogen (F, CI, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀₋Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen in der bzw. den Alkylgruppe(n).

Der nicht hydrolysierbare Rest R ist beispielsweise Alkyl (vorzugsweise C₁₋₆Alkyl, wie z.B. Methyl, Ethyl, n-Propyl, Isopropyl, n-Butyl, s-Butyl und t-Butyl, Pentyl, Hexyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl).

Die genannten Reste R und X können gegebenenfalls einen oder mehrere übliche Substituenten, wie z.B. Halogen, Ether-, Phosphorsäure-, Sulfonsäure-, Cyano-, Amid-Mercapto-, Thioether- oder Alkoxygruppen, als funktionelle Gruppen aufweisen.

Der Rest R kann eine funktionelle Gruppe enthalten, über die eine Vernetzung möglich ist. Konkrete Beispiele für die funktionellen Gruppen des Restes R sind Epoxy-, Hydroxy-, Amino-, Monoalkylamino-, Dialkylamino-, Carboxy-, Allyl-, Vinyl-, Acryl-, Acryloxy-, Methacryl-, Methacryloxy-, Cyano-, Aldehyd- und Alkylcarbonylgruppen. Diese Gruppen sind vorzugsweise über Alkylen-, Alkenylen- oder Arylen-Brückengruppen, die durch Sauerstoff- oder Schwefelatome oder -NH-Gruppen unterbrochen sein können, an das Siliciumatom gebunden. Die genannten Brückengruppen leiten sich zum Beispiel von den oben genannten Alkyl-, Alkenyl- oder Arylresten ab. Die Brückengruppen der Reste R enthalten vorzugsweise 1 bis 18, insbesondere 1 bis 8 Kohlenstoffatome.

Besonders bevorzugte hydrolysierbare Silane der allgemeinen Formel (I) sind Tetraalkoxysilane, wie Tetramethoxysilan und insbesondere Tetraethoxysilan (TEOS). Durch saure Katalyse erhaltene anorganische Sole, z.B. TEOS-Hydrolysate, sind besonders bevorzugt. Besonders bevorzugte Organosilane der allgemeinen Formel (II) sind Methyltriethoxysilan (MTEOS) und MTEOS-Hydrolysate, Epoxysilane wie 3-Glycidyloxypropyltrimethoxysilan (GPTS), Methacryloxypropyltrimethoxysilan und Acryloxypropyltrimethoxysilan, wobei GPTS-Hydrolysate mit Vorteil eingesetzt werden können.

Sofern ein organisch-modifiziertes anorganisches Hybridmaterial hergestellt wird, können ausschließlich Silane der Formel (II) oder eine Mischung von Silanen der Formel (I) und (II) eingesetzt werden. Bei den anorganischen Solen auf Siliciumbasis werden ausschließlich Silane der Formel (I) verwendet, wobei gegebenenfalls anteilig hydrolysierbare Verbindungen der obigen Formel MXₙ zugegeben werden.

Sofern das anorganische Sol aus im Lösungsmittel dispergierten diskreten Oxidteilchen besteht, können sie die Härte der Schicht verbessern. Bei diesen Teilchen handelt es sich insbesondere um nanoskalige anorganische Teilchen. Die Teilchengröße (röntgenographisch ermitteltes Volumenmittel) liegt z.B. im Bereich ≤ 200 nm, insbesondere ≤100 nm, bevorzugt ≤ 50 nm, z.B. 1 nm bis 20 nm.

Erfindungsgemäß können z.B. anorganische Sole von SiO₂, ZrO₂, GeO₂, CeO₂, ZnO, Ta₂O₅, SnO₂ und Al₂O₃ (in allen Modifikationen, insbesondere als Böhmit AlO(OH)), vorzugsweise Sole von SiO₂, Al₂O₃, ZrO₂, GeO₂ sowie Mischungen derselben als nanoskalige Teilchen verwendet werden. Solche Sole sind zum Teil auch im Handel erhältlich, z.B. Kieselsole, wie die Levasile® der Bayer AG.

Als anorganisches oder organisch modifiziertes anorganisches matrixbildendes Material kann auch eine Kombination von derartigen nanoskaligen Teilchen mit als Hydrolysaten oder (Poly)Kondensaten vorliegenden anorganischen Solen oder organisch-modifizierten Hybridmaterialien verwendet werden, was hier mit Nanokompositen bezeichnet wird.

Gegebenenfalls können auch organische Monomere, Oligomere oder Polymere aller Art als organische matrixbildende Materialien enthalten sein, die als Flexibilisatoren dienen, wobei es sich um übliche organische Bindemittel handeln kann. Diese können zur Verbesserung der Beschichtungsfähigkeit verwendet werden. In der Regel werden sie nach Fertigstellung der Schicht photokatalytisch abgebaut. Die Oligomere und Polymere können funktionelle Gruppen aufweisen, über die eine Vernetzung möglich ist. Diese Vernetzungsmöglichkeit ist auch gegebenenfalls bei den oben erläuterten organisch modifizierten anorganischen matrixbildenden Materialien möglich. Auch Mischungen anorganischer, organisch modifizierter anorganischer und/oder organischer matrixbildender Materialien sind möglich.

Beispiele für verwendbare organische matrixbildende Materialien sind Polymere und/oder Oligomere, die polare Gruppen, wie Hydroxyl-, primäre, sekundäre oder tertiäre Amino-, Carboxyl- oder Carboxylatgruppen, aufweisen. Typische Beispiele sind Polyvinylalkohol, Polyvinylpyrrolidon, Polyacrylamid, Polyvinylpyridin, Polyallylamin, Polyacrylsäure, Polyvinylacetat, Polymethylmethacrylsäure, Stärke, Gummi arabicum, andere polymere Alkohole wie z.B. Polyethylen-Polyvinylalkohol-Copolymere, Polyethylenglycol, Polypropylenglycol und Poly(4-vinylphenol) bzw. davon abgeleitete Monomere oder Oligomere. Als Polyvinylalkohol kann z.B. das im Handel erhältliche Mowiol® 18-88 der Fa. Hoechst verwendet werden.

Der Verdünnungsgrad der gemäß Schritt d) aufzutragenden Dispersion hängt u.a. von der gewünschten Schichtdicke ab. Im allgemeinen hat die Dispersion einen Feststoffgehalt von weniger als 50 Gew.-%, insbesondere weniger als 20 Gew.-% und bevorzugt weniger als 10 Gew.-%, z.B. 2,5 Gew.-%.

Für den Auftrag werden die üblichen Verfahren verwendet, z.B. Tauchen, Rollen, Rakeln, Fluten, Ziehen, Spritzen, Schleudern oder Aufstreichen. Die aufgebrachte Dispersion wird gegebenenfalls getrocknet und wärmebehandelt, etwa zur Härtung oder Verdichtung. Die dafür verwendete Wärmebehandlung hängt natürlich vom Substrat ab. Bei Kunststoffsubstraten oder Kunststoffoberflächen, die in der Regel eine Sperrschicht aufweisen (siehe nachstehend), können naturgemäß keine sehr hohen Temperaturen verwendet werden. So werden Polycarbonat (PC)-Substrate z.B. bei etwa 130°C für 1 h wärmebehandelt. Allgemein erfolgt die Wärmebehandlung z.B. bei einer Temperatur von 100 bis 200°C und, sofern kein Kunststoff vorhanden ist, bis zu 500°C oder mehr. Die Wärmebehandlung erfolgt z.B. 15 min bis 2 h. In der Regel werden Schichtdicken von 50 nm bis 30 µm erhalten, bevorzugt 100 nm bis 1 µm, z.B. 50 bis 700 nm.

Das anorganische Sol oder das organisch-modifizierte anorganische Hybridmaterial dienen nicht nur als matrixbildendes Material für die photokatalytische Schicht, sondern auch der verbesserten Schichthaftung. TiO₂ kann in der Schicht als matrixbildender Bestandteil und/oder als Teilchen vorliegen.

Die photokatalytische Schicht wird gegebenenfalls und bevorzugt durch Bestrahlung mit sichtbarem und/oder UV-Licht aktiviert, z.B. mit einer Quecksilber-Hochdrucklampe von 700 W für 1 bis 5 min oder einer Xenonlampe von 750 W für 1 bis 10 min. Quecksilber-Hochdrucklampen haben einen relativ hohen Anteil an UV-Licht, das Spektrum von Xenonlampen entspricht etwa dem Sonnenlicht. Bevorzugt wird mit UV-Licht bzw. einem hohen Anteil an UV-Licht bestrahlt. Es werden außergewöhnlich aktive photokatalytisch Schichten erhalten, wobei die Effizienz gegenüber dem Stand der Technik etwa bis zum 10-fachen gesteigert werden kann.

Wie bereits vorstehend erwähnt, sind bei Substraten, die aus einem empfindlichen Material bestehen oder eine Oberflächenschicht (z.B. eine Lackierung oder ein Email) aus einem solchen empfindlichen Material aufweisen, ein unmittelbarer Auftrag nicht oder nur schlecht möglich. Es kann eine Sperrschicht zwischen dem Substrat (gegebenenfalls mit Oberflächenbeschichtung) und der photokatalytischen Schicht angeordnet werden. Hierfür kann eine anorganische Schicht aus einem anorganischen matrixbildenden Material eingesetzt werden, wofür die vorstehend beschriebenen anorganischen Sole verwendet werden können.

Weiter wurde festgestellt, dass es möglich ist, eine photokatalytische Schicht mit "eingebauter" Sperrschicht zu erhalten, indem ein Konzentrationsgradient von TiO₂ in der photokatalytischen Schicht ausgebildet wird. Diese Sperrschicht kann nicht nur für die erfindungsgemäß hergestellten photokatalytischen Schichten, sondern auch bei den üblichen photokatalytischen Schichten mit Vorteil eingesetzt werden.

Demgemäss kann ein Substrat mit einer photokatalytischen Schicht bereitgestellt werden, die photokatalytisch aktives TiO₂ und ein Matrixmaterial umfasst, wobei das TiO₂ in einem solchen Konzentrationsgradienten enthalten ist, dass die Konzentration des TiO₂ an der Oberfläche der photokatalytischen Schicht angereichert ist, wobei vorzugsweise zwischen dem photokatalytisch aktiven TiO₂ und dem Substrat eine rein anorganische Sperrschicht ausgebildet ist.

Diese photokatalytischen Schichten mit einem solchen Konzentrationsgradienten von TiO₂, dass die Konzentration an TiO₂ an der Oberfläche der photokatalytischen Schicht am größten ist, können insbesondere durch ein Verfahren hergestellt werden, bei dem oberflächenmodifizierte TiO₂-Teilchen in einem matrixbildenden Material von selbst einen Konzentrationsgradienten ausbilden.

Es können dotierte oder undotierte TiO₂-Teilchen verwendet werden. Die Dotierung kann mit nach den im Stand der Technik bekannten Verfahren durchgeführt werden, wobei die in der Technik bekannten metallischen oder nichtmetallischen Dotiermittel eingesetzt werden können, z.B. die oben für die erste erfindungsgemäße Ausführungsform genannten Metalle und Nichtmetalle. Durch die Dotierung werden überraschenderweise eine Aktivitätserhöhung sowie oftmals eine photokatalytische Aktivität im sichtbaren Lichtbereich ("Visible-light-Photokatalysatoren") erzielt.

Bevorzugt werden nach dem Sol-Gel-Verfahren erhaltene TiO₂-Teilchen verwendet. Hierfür können die oben genannten hydrolysierbaren Titanverbindungen eingesetzt werden. Es werden Teilchen verwendet, die entsprechend der ersten Ausführungsform der Erfindung gemäß den Schritten a) und b) hergestellt wurden, wobei dotierte oder nicht dotierte TiO₂-Teilchen eingesetzt werden können.

Von den TiO₂-Teilchen wird in der Regel eine Dispersion in einem Lösungsmittel hergestellt. Hierfür eignet sich z.B. Toluol. Es kann auch eine Aufschlämmung von TiO₂-Teilchen in einem Lösungsmittel oder ein Pulver von TiO₂-Teilchen ohne Lösungsmittel verwendet werden. Hierzu wird ein Oberflächenmodifizierungsmittel zugegeben, das mindestens eine hydrophobe oder hydrophile Gruppe aufweist, wobei hydrophobe Gruppen bevorzugt sind.

Als Oberflächenmodifizierungsmittel eignen sich (vorzugsweise niedermolekulare oder oligomere, gegebenenfalls aber auch polymere) Verbindungen, die zum einen über eine oder mehrere Gruppen verfügen, die mit auf der Oberfläche der TiO₂₋Teilchen vorhandenen reaktionsfähigen Gruppen (wie beispielsweise OH-Gruppen) reagieren oder zumindest wechselwirken können, und zum anderen mindestens eine hydrophobe oder hydrophile Gruppe aufweisen.

Eine Oberflächenmodifizierung der TiO₂-Teilchen kann z.B. durch Mischen der Teilchen mit nachstehend erläuterten geeigneten Verbindungen gegebenenfalls in einem Lösungsmittel und unter Anwesenheit eines Katalysators erfolgen. Häufig genügt Rühren von Oberflächenmodifizierungsmittel mit den Teilchen bei Raumtemperatur über einen gewissen Zeitraum, z.B. über 1 bis 3 h. Vorteilhaft wirkt sich oft auch eine Behandlung im Ultraschallbad aus.

Die Oberflächenmodifizierungsmittel können z.B. sowohl kovalente (einschließlich koordinativen in Form von Komplexen) als auch ionische (salzartige) Bindungen zur Oberfläche der TiO₂-Teilchen ausbilden, während unter den reinen Wechselwirkungen beispielhaft Dipol-Dipol-Wechselwirkungen, Wasserstoffbrückenbindungen und van der Waals-Wechselwirkungen zu nennen sind. Bevorzugt ist die Ausbildung von kovalenten Bindungen.

Erfindungsgemäß bevorzugt ist es auch, dass die Oberflächenmodifizierungsmittel ein relativ niedriges Molekulargewicht aufweisen. Beispielsweise kann das Molekulargewicht weniger als 1.500, insbesondere unter 1000 und vorzugsweise unter 700 betragen. Dies schließt selbstverständlich ein deutlich höheres Molekulargewicht der Verbindungen nicht aus (z.B. bis zu 2.000 und mehr).

Als Oberflächenmodifizierungsmittel mit Gruppen, die mit den Oberflächengruppen der TiO₂-Teilchen reagieren oder wechselwirken können, eignen sich z.B. hydrolysierbare Silane, Carbonsäuren, Carbonsäurehalogenide, Carbonsäureester, Carbonsäureanhydride, Oxime, β-Dicarbonylverbindungen wie β-Diketone, Alkohole, Polyether und funktionalisierte Polyether (z.B. Trioxadecansäure), Amine, Alkylhalogenide und deren Derivate.

Das Konzept der Hydrophilie/Hydrophobie ist als Grundkonzept der Chemie dem Fachmann bestens bekannt. Hydrophobe Substanzen oder Gruppen stoßen Wasser ab, während hydrophile Substanzen oder Gruppen Wasser anziehen. Der hydrophile Charakter kann z.B. durch Hydroxy-, Oxy-, Carboxylat-, Sulfat-, Sulfonatfunktionen oder Polyetherketten in der Substanz gebildet werden. Als hydrophobe Gruppe eignen sich z.B. langkettige aliphatische Kohlenwasserstoffgruppen, z.B. mit 3 bis 30 oder mehr Kohlenstoffatomen, insbesondere Alkylgruppen, aromatische Gruppen, oder Gruppen, die mindestens ein Fluoratom aufweisen, wobei es sich vorzugsweise um Kohlenwasserstoffgruppen, insbesondere Alkylreste, mit 3 bis 20 oder mehr Kohlenstoffatomen und 1 bis 30 Fluoratomen handelt.

Als Oberflächenmodifizierungsmittel werden vorzugsweise hydrolysierbare Silane mit mindestens einer nicht hydrolysierbaren hydrophoben oder hydrophilen Gruppen verwendet, wobei jene mit einer hydrophoben Gruppe besonders bevorzugt sind. Dabei handelt es sich besonders bevorzugt um hydrolysierbare Silane, die mindestens eine nicht hydrolysierbare Gruppe aufweisen, die mindestens ein Fluoratom (Fluorsilane) oder eine langkettige aliphatische Kohlenwasserstoffgruppe, z.B. mit 3 bis 30 Kohlenstoffatomen, vorzugsweise eine Alkylgruppe, oder eine aromatische Gruppe enthält.

Die neben den hydrolysierbaren Silanen verwendbaren Oberflächenmodifizierungsmittel mit hydrophoben Gruppen können z.B. die Formel R°-Y aufweisen, wobei Y -COOH, -OH, -COZ, -Z (mit Z = Halogenid wie F, Cl, Br oder I), -C(O)O(O)CB (worin B ein beliebiger Rest einer Carbonsäure oder R° ist oder eine funktionelle Gruppe der anderen oben beschriebenen Verbindungen (die gegebenenfalls einen weitere Gruppe wie B umfasst) ist und R° eine langkettige aliphatische Kohlenwasserstoffgruppe, vorzugsweise eine Alkylgruppe, z.B. mit 3 bis 30 C-Atomen, oder eine aromatische Gruppe, wie gebenenfalls substituiertes Phenyl oder Naphthyl, oder eine Kohlenwasserstoffgruppe, vorzugsweise eine Alkylgruppe, mit mindestens einem Fluoratom ist. Bei einem Carbonsäureester kann z.B. der Rest der Carbonsäure und/oder der Rest des Alkohols die hydrophobe Gruppe bilden.

Die bevorzugten hydrolysierbaren Silane mit langkettiger aliphatischer Kohlenwasserstoffgruppe als hydrophober Gruppe weisen insbesondere die oben erläuterte Formel (II) (RₐSiX(₄₋ₐ)) auf, worin a und X wie oben definiert sind, wobei a vorzugsweise 1 ist, und R eine langkettige aliphatische Kohlenwasserstoffgruppe, z.B. mit 3 bis 30 C-Atomen, ist. Bei der langkettigen aliphatischen Kohlenwasserstoffgruppe handelt es sich bevorzugt um eine Alkylgruppe. Gegebenenfalls können auch Silane der Formel (II) verwendet werden, worin R eine gegebenenfalls substituierte aromatische Gruppe ist.

Erfindungsgemäß können besonders bevorzugt hydrolysierbare Silanverbindungen mit mindestens einem nicht-hydrolysierbaren Rest als hydrophober Gruppe eingesetzt werden, die die allgemeine Formel

Rf(R)_{b}SiX_{(3-b)} (III)

aufweisen, worin X und R wie in Formel (I) bzw. (II) definiert sind, Rf eine nicht hydrolysierbare Gruppe ist, die 1 bis 30 Fluoratome an Kohlenstoffatome gebunden aufweist, die vorzugsweise durch mindestens zwei Atome, vorzugsweise eine Ethylen-, Propylen-, Ethylenoxy- oder Propylenoxygruppe, von Si getrennt sind, und b 0, 1 oder 2, bevorzugt 0 oder 1, ist. R ist insbesondere ein Rest ohne funktionelle Gruppe, bevorzugt eine Alkylgruppe, insbesondere C₁₋₄Alkyl wie Methyl oder Ethyl. Vorzugsweise enthalten die Gruppen Rf 3 bis 25 und insbesondere 3 bis 21 Fluoratome, die an aliphatische (einschließlich cycloaliphatische) Kohlenstoffatome gebunden sind. Rf ist vorzugsweise eine fluorierte Alkylgruppe mit 3 bis 20 C-Atomen, die gegebenenfalls durch ein oder mehrere Sauerstoffatome unterbrochen ist.

Beispiele für Rf sind CF₃CH₂CH₂, C₂F₅CH₂CH₂, n-C₆F₁₃CH₂CH₂, i-C₃F₇0CH₂CH₂CH₂, n-C₈F₁₇CH₂CH₂ und n-C₁₀F₂₁-CH₂CH₂.

Fluoratome, die gegebenenfalls an aromatische Kohlenstoffatome gebunden sind (z.B. C₆F₄), werden nicht berücksichtigt. Bei der fluorhaltigen Gruppe Rf kann es sich auch um einen Chelatliganden handeln. Es ist auch möglich, dass sich ein oder mehrere Fluoratome an einem Kohlenstoffatom befinden, von dem eine Doppel- oder Dreifachbindung ausgeht. Beispiele für einsetzbare Fluorsilane sind CF₃CH₂CH₂SiCl₂(CH₃), CF₃CH₂CH₂SiCl(CH₃)₂, CF₃CH₂CH₂Si(CH₃)(OCH₃)₂, C₂F₅-CH₂CH₂-SiZ₃, n-C₆F₁₃₋CH₂CH₂SiZ₃, n-C₈F₁₇-CH₂CH₂-SiZ₃, n-C₁₀F₂₁-CH₂CH₂-SiZ₃ mit (Z = OCH₃, OC₂H₅ oder Cl); i-C₃F₇O-CH₂CH₂CH₂-SiCl₂(CH₃), n-C₆F₁₃-CH₂CH₂-Si(OCH₂CH₃)₂, n-C₆F₁₃₋CH₂CH₂-SiCl₂(CH₃) und n-C₆F₁₃-CH₂CH₂-SiCl(CH₃)₂. Bevorzugt wird 3,3,4,4,5,5,6,6,7,7,8,8,8-Tridecafluoroctyl triethoxysilan (FTS) eingesetzt.

Beispiele für hydrolysierbare Silane mit langkettiger aliphatischer Kohlenwasserstoffgruppe sind Hexadecyltrimethoxysilan (HDTMS), Dodecyltriethoxysilan und Propyltrimethoxysilan. Weitere Beispiele für Oberflächenmodifizierungsmittel mit hydrophoben Gruppen sind Heptadecafluornonansäure, Stearinsäure, Heptafluorbuttersäurechlorid, Hexansäurechlorid, Hexansäuremethylester, Perfluorheptansäuremethylester, Perfluoroctansäureanhydrid, Hexansäureanhydrid, 2-Heptanonoxim, 1,1,1-Trifluor-5,5-dimethylhexan-2,4-dion-2-oxim, 1,1,1,2,2,3,3-Heptafluor-7,7-dimethyl-4,6-octandion, 1H,1H-Pentadecafluoroctanol, Octanol, Hexylchlorid und Nonafluorbutylchlorid.

Als Oberflächenmodifizierungsmittel mit hydrophilen Gruppen eignen sich neben oben genanten Verbindungsklassen auch ungesättigte Carbonsäuren, β-Carbonylcarbonsäuren, mit polymerisierbaren Doppelbindungen, ethylenisch ungesättigte Alkohole und Amine, Aminosäuren, Epoxide und Diepoxide.

Konkrete Beispiele für organische Verbindungen zur Oberflächenmodifizierung mit hydrophilen Gruppen sind Diepoxide wie 3,4-Epoxycyclohexylmethyl-3,4-epoxy-cyclohexancarboxylat, Bis-(3,4-epoxycyclohexyl)adipat, Cyclohexandimethanoldiglycidether, Neopentylglycoldiglycidether, 1,6-Hexandioldiglycidether, Propylenglycoldiglycidether, Bisphenol-A-diglycidether, Bisphenol-F-diglycidether, ungesättigte Carbonsäuren wie Acrylsäure und Methacrylsäure, und β-Diketone wie Acetylacetonat.

Weitere besonders bevorzugte Verbindungen zur Oberflächenmodifizierung mit hydrophilen Gruppen sind hydrolysierbare Silane mit mindestens (und vorzugsweise) einem nicht hydrolysierbaren Rest mit einer Hydroxy-, Carboxylat- oder Epoxy- bzw. Glycidyloxygruppe, wobei es sich insbesondere um Silane der Formel (II) handelt. Beispiele sind Glycidyloxyalkyltrialkoxysilane, wie beispielsweise 3-Glycidyloxypropyltrimethoxysilan und 3-Glycidyloxypropyltriethoxysilan.

Weitere Beispiele für Oberflächenmodifizierungsmittel sind Diphosphate, Polyphosphate, Polyvinylalkohol, Polyvinylpyrrolidon und Methylvinylether-Maleinsäureanhydrid-Copolymere.

Bei der Oberflächenmodifizierung werden für 1 g TiO₂-Pulver z.B. 10 ml Lösungsmittel verwendet. Die erhaltene Dispersion mit dem Oberflächenmodifizierungsmittel wird einfach gerührt, z.B. 2 h, wodurch die Oberflächenmodifizierung der Teilchen erreicht wird. Das Verhältnis von TiO₂ zu zugegebenem Oberflächenmodifizierungsmittel beträgt, bezogen auf Mol, vorzugsweise 1:0,005 bis 1:0,1 und insbesondere 1:0,01 bis 1:0,02, wobei dies insbesondere für das Oberflächenmodifizierungsmittel mit mindestens einem Fluoratom gilt.

Anschließend vorzugsweise ein Lösungsmitteltausch zu einem anderen organischen Lösungsmittel, wie Methylethylketon, Aceton, Chloroform oder Petrolether.

Anschließend kann ein anorganisches oder organisch modifiziertes matrixbildendes Material zugegeben werden. Hierfür kann z.B. ein anorganisches Sol oder ein organisch-modifiziertes anorganisches Hybridmaterial zugegeben werden, wie vorstehend erläutert. Es können auch die oben genannten nanoskaligen Teilchen enthalten sein.

Das Oberflächenmodifizierungsmittel dient zur Erzeugung des Konzentrationsgradienten in der Matrix aus dem matrixbildenden Material. Bei einer hydrophilen Matrix werden Oberflächenmodifizierungsmittel mit hydrophober Gruppe verwendet und bei hydrophober Matrix werden Oberflächenmodifizierungsmittel mit hydrophiler Gruppe verwendet. Dadurch wird ein Potentialunterschied erreicht, der zur Entmischung führt, so dass die oberflächenmodifizierten TiO₂-Teilchen an der Oberfläche angereichert werden. Da die matrixbildenden Materialien und das Lösungsmittel, die verwendet werden, in der Regel hydrophil sind, wird vorzugsweise mit hydrophoben Gruppen oberflächenmodifiziert.

Der Auftrag der erhaltenen Dispersion auf das Substrat und die Wärmebehandlung erfolgt auf die übliche Weise, z.B. wie vorstehend beschrieben. Durch den hydrophoben Charakter der hydrophoben Gruppen auf der Oberfläche der TiO₂-Teilchen ergibt sich eine Entmischung in der so erhaltenen Dispersion, wobei die oberflächenmodifizierten TiO₂-Teilchen nach dem Auftrag auf das Substrat an der Oberfläche der photokatalytischen Schicht angereichert werden. Bei der Härtung der aufgetragenen Schicht wird somit ein Konzentrationsgradient der oberflächenmodifizierten TiO₂-Partikel in dem anderen anorganischen oder organisch modifizierten matrixbildenden Material bzw. in der daraus gebildeten Matrix gebildet. Im unteren Bereich der Schicht befindet sich überwiegend das anorganische oder organisch modifizierte anorganische matrixbildende Material bzw. die daraus gebildete Matrix.

Bei Belichtung werden durch die photokatalytische Aktivität der Schicht zumindest die hydrophoben organischen Gruppen zerstört, was an einer beträchtlichen Verringerung des Kontaktwinkels nach Bestrahlung deutlich wird. Durch den Konzentrationsgradienten befindet sich an der Grenzfläche zum Substrat überwiegend die Matrix aus den eingesetzten anorganischen oder organisch modifizierten matrixbildenden Materialien, die dort im wesentlichen kein TiO₂ enthält. Sofern organisch modifiziertes anorganisches matrixbildendes Material eingesetzt wurde, findet in dem Bereich in der photokatalytischen Schicht, in dem TiO₂₋angereicherte Bereiche und im wesentlichen TiO₂-freie Bereiche angrenzen, die vorstehend bei der "isolierten" Sperrschicht erläuterte photokatalytische Oxidation der organischen Bestandteile statt, so dass sich auch dort eine anorganische Sperrschicht ausbildet. Somit bildet sich eine "eingebaute" Sperrschicht aus anorganischem Material aus, die das darunter befindliche Substrat schützen kann.

Auch hier können im Prinzip alle oben genannten Substrate verwendet werden. Mit besonderem Vorteil wird die photokatalytische Schicht mit eingebauter Sperrschicht auf ein Substrat aus Glas oder Kunststoff oder eine Oberflächenschicht des Substrats aus diesem Material aufgebracht.

Es wurde weiter festgestellt, dass eine spezielle Hybridschicht aus einem organisch modifizierten anorganischen Material eine ausgezeichnete Sperrschicht liefert. Diese Sperrschicht kann nicht nur für die erfindungsgemäß hergestellten photokatalytischen Schichten, sondern auch bei den üblichen photokatalytischen Schichten mit Vorteil eingesetzt werden.

Nach einer Ausführungsform wird daher ein Substrat mit einer photokatalytischen, TiO₂ enthaltenden Schicht bereitgestellt, das dadurch gekennzeichnet ist, dass zwischen Substrat und photokatalytischer Schicht eine Hybridschicht aus einem organisch modifizierten anorganischen Material vorgesehen ist. Dabei bildet sich bei der Erstaktivierung durch Belichtung aufgrund der Oxidation der organischen Bestandteile ein Gradient im Kohlenstoffgehalt an der Oberfläche der Sperrschicht aus. Das so erhaltene Gradientenmaterial weist an der Oberfläche ein photokatalytisch aktive, TiO₂ enthaltende anorganische Schicht auf, gefolgt von einer anorganischen Sperrschicht, die mit zunehmender Schichttiefe in das anorganischorganische Hybridmaterial übergeht. Durch das Eindiffundieren der TiO₂-Partikel in die Oberfläche der Sperrschicht bei der Schichtherstellung bildet sich ebenfalls ein Gradient in der TiO₂-Konzentration aus.

Diese Sperrschicht bietet einerseits den Vorteil, dass ein sicherer Schutz von empfindlichen Materialen vor der photokatalytischen Schicht gewährleistet ist, zum anderen kann die Sperrschicht auf einfache Weise nasschemisch aufgebracht werden und ohne weiteres rissfrei in der gewünschten Schichtdicke aufgebracht werden. Durch die organischen Bestandteile wird eine gewisse Flexibilität bei der Beschichtung erreicht, wobei erstaunlicherweise trotz der eingesetzten organischen Bestandteile eine sichere Sperrwirkung erreicht wird.

Als Substrat können im Prinzip alle oben genannten Substrate verwendet werden. Mit besonderem Vorteil wird die Sperrschicht auf ein Substrat aus Glas oder Kunststoff oder eine Oberflächenschicht des Substrats aus diesem Material aufgebracht.

Die Sperrschicht ist eine Hybridschicht aus einem organisch modifizierten anorganischen Material, dessen organische Bestandteile zumindest an der Grenzfläche zu der photokatalytischen TiO₂-Schicht unter Ausbildung einer rein anorganischen Schutzschicht photokatalytisch zersetzt worden sind.

Zur Herstellung dieser Hybridschicht wird das vorstehend beschriebene organisch-modifizierte anorganische Hybridmaterial als Beschichtungszusammensetzung verwendet. Es gelten alle vorstehend für dieses Material aufgeführten Erläuterungen, sofern nicht anders angegeben, wobei das Hybridmaterial jedoch nicht zu der TiO₂₋haltigen Dispersion gegeben wird, sondern als solches auf das Substrat aufgebracht wird.

Es wird vorzugsweise ein solches organisch-modifiziertes anorganisches Hybridmaterial verwendet, bei dem nicht mehr 10 Mol-%, bevorzugt nicht mehr als 5 Mol-% und insbesondere nicht mehr als 3 Mol-% und bevorzugt mindestens 0,1 Mol-%, bevorzugter mindestens 0,5 Mol-% und insbesondere mindestens 1 Mol-%, z.B. 0,1 bis 10 Mol-%, bevorzugt 1 bis 3 Mol-%, der enthaltenen glas- oder keramikbildenden Elemente M eine oder mehrere organische Gruppen aufweisen. d.h. vorzugsweise nicht mehr 10 Mol-% und insbesondere nicht mehr als 3 Mol-%, z.B. z.B. 0,1 bis 10 Mol-%, bevorzugt 1 bis 3 Mol-%, der enthaltenen glas- oder keramikbildenden Elemente M weisen eine oder mehrere organische Gruppen auf. Vorzugsweise weisen zumindest ein Teil oder alle organischen Gruppen eine funktionelle Gruppe auf, über die eine Vernetzung möglich ist. Das Hybridmaterial wird bevorzugt nach dem Sol-Gel-Verfahren hergestellt. Als Lösungsmittel kommen die oben genannten in Betracht. Besonders bevorzugt handelt es sich um ein Hydrolysat oder Kondensat aus Silanen der Formel (I) und der Formel (II). Gegebenenfalls kann zumindest ein Teil der Silane der Formel (I) durch andere hydrolysierbare Verbindungen eines glas-oder keramikbildenden Elements M ersetzt werden.

Bevorzugt wird zur Herstellung des Hybridmaterials eine stöchiometrische Menge Wasser zu den hydrolysierbaren Verbindungen gegeben. Die erhaltene Beschichtungszusammensetzung wird z.B. als 1 bis 70 Gew.-%iges Sol/Gel (bezogen auf den Feststoffgehalt) in einem Alkohol eingesetzt. Eine besonders bevorzugt eingesetzte Kombination an hydrolysierbaren Verbindungen ist TEOS oder MTEOS und GPTS.

Das organisch-modifizierte anorganische Hybridmaterial kann vorzugsweise oben genannten nanoskaligen Teilchen unter Bildung eines Nanokomposits umfassen. Zu dem organisch-modifizierten anorganischen Hybridmaterial werden vorzugsweise keine organischen Polymere zugesetzt, d.h. die Beschichtungszusammensetzung ist bevorzugt frei von organischen Polymeren.

Der Auftrag des Hybridmaterials erfolgt auf übliche Weise, z.B. nach den oben beschriebenen Verfahren. Die aufgetragene Schicht wird gegebenenfalls getrocknet und gehärtet, wobei die Härtung durch Wärme oder Bestrahlung erfolgen kann. Gegebenenfalls kann die Wärmebehandlung gemeinsam mit der photokatalytischen Schicht erfolgen. Bezüglich der Temperatur und der Dauer gelten die oben für die photokatalytische Schicht genannten Bedingungen. Die erhaltene Schichtdicke beträgt z.B. 50 nm bis 1 µm, bevorzugt 100 nm bis 1 µm, z.B. 100 bis 700 nm.

Auf die Hybridschicht wird die TiO₂-haltige Zusammensetzung aufgebracht, die oberflächenmodifizierte TiO₂-Teilchen enthält. Dabei werden oberflächenmodifizierte TiO₂-Teilchen eingesetzt, wie sie vorstehend für die zweite Ausführungsform der Erfindung erläutert wurden. Es können Oberflächenmodifizierungsmittel mit hydrophoben oder hydrophilen Gruppen eingesetzt werden.

Im allgemeinen sind photokatalytisch aktive TiO₂-Partikel in einer Matrix verteilt, wobei das TiO₂ auch Teil der Matrix sein kann. Die Schicht kann auch nur aus TiO₂ bestehen. Die Matrix kann allgemein aus anorganischen oder aus organisch-modifizierten anorganischen Matrixmaterialien gebildet sein. Dementsprechend kann die Zusammensetzung auch anorganische oder organisch-modifizierte anorganische matrixbildende Materialien enthalten, wie sie vorstehend erläutert wurden. Es können auch die oben genannten nanoskaligen Teilchen enthalten sein. Die Zusammensetzung kann aber auch nur TiO₂-Teilchen enthalten, so dass eine photokatalytische Schicht nur aus TiO₂ gebildet wird.

Es wurde gefunden, dass die Schicht aus dem Hybridmaterial durch photokatalytische Oxidation des organischen Anteils zumindest an der Grenzfläche zur photokatalytischen Schicht in ein rein anorganisches System übergeht. Hierbei erfolgt durch die überlagerte photokatalytisch aktive Schicht eine photokatalytische Oxidation der organischen Bestandteile der darunter liegenden Hybridschicht. Dieser Prozess ist oft auf wenige Nanometer der obersten Lage dieser Schicht begrenzt, da die Diffusion von Löchern und Elektronen nur sehr kurz reicht. Durch die Umsetzung der obersten Lage der Hybridschicht zu einer anorganischen Schicht wird der Zerstörungsprozess gestoppt und man erhält eine wirksame Sperrschicht, die eine Diffusion von Natriumionen aus Glassubstraten in die photokatalytische Schicht verhindert und empfindliche Kunststoffsubstrate gegen Schädigung durch die photokatalytische Schicht schützt. Außerdem werden die organischen Gruppen des oberflächenmodifizierten TiO₂ photokatalytisch zersetzt.

Bei allen beschriebenen Ausführungsformen kann eine weitere Erhöhung der photokatalytischen Wirkung erzielt werden, wenn man unter der photokatalytischen Schicht eine elektrisch leitfähige Unterlage verwendet und/oder der photokatalytischen Schicht spezielle elektrisch leitfähige Partikel zusetzt.

Bei den als elektrisch leitfähigen Teilchen verwendeten dotierten Metalloxiden kann es sich z.B. um dotiertes Zinnoxid, wie ITO (Indium-Zinnoxid), ATO (Antimondotiertes Zinnoxid) und FTO (fluordotiertes Zinnoxid), und/oder Aluminium-dotiertes Zinkoxid handeln. Es kann auch ein elektrisch leitendes Polymer, wie BAYTRON von der Bayer AG verwendet werden. Als Halbleiter kommt zum Beispiel gegebenenfalls dotiertes Germanium oder Silicium in Betracht. Die elektrisch leitfähigen Teilchen können z.B. als Pulver oder in Form einer Dispersion in einem Lösungsmittel zur Dispersion für die photokatalytische Schicht gegeben werden.

Vorzugsweise werden möglichst transparente leitfähige Partikel eingesetzt. Dadurch wird eine hohe Lichtabsorption, wie sie z. B. durch leitfähige Metallpartikel verursacht wird, vermieden und es ergeben sich noch wirksamere photokatalytische Schichten.

Alternativ oder gleichzeitig kann auch eine elektrisch leitfähige Unterlage als Schicht unter der photokatalytisch aktiven Schicht vorgesehen sein. Bei der elektrisch leitfähigen Unterlage kann es sich um ein Metall, einen Halbleiter, ein elektrisch leitfähiges Polymer oder ein dotiertes Metalloxid handeln. Beispiele für das dotierte Metalloxid, den Halbleiter oder das elektrisch leitfähige Polymer sind dieselben, die oben als Beispiele für die elektrisch leitfähigen Teilchen genannt wurden. Beispiele für das Metall, bei dem es sich auch um eine Metalllegierung handeln kann, sind Stahl, einschließlich Edelstahl, Chrom, Kupfer, Titan, Zinn, Zink, Messing und Aluminium.

Die Unterlage kann als Schicht auf dem Substrat vorliegen oder das Substrat selbst sein. Für die Aufbringung einer elektrisch leitfähigen Schicht als Unterlage auf einem Substrat können die dem Fachmann vertrauten Verfahren verwendet werden, z.B. nasschemische Verfahren, Abscheidungsverfahren (Sputtern) oder eine Metallisierung. Im allgemeinen reichen dünne Schichten aus.

Bei allen erläuterten Ausführungsformen können die Substrate mit den photokatalytischen Schichten gebrannt werden, um zu rein anorganischen Schichten zu gelangen. Überdies können in allen Schichten auch Partikel mit größerem Durchmesser, z.B. im µm-Bereich eingebaut werden.

Die erfindungsgemäßen Substrate mit den photokatalytischen Schichten können z.B. als selbstreinigende Oberflächen (gegebenenfalls durch Bestrahlung mit Licht unterstützt) oder zur Luftreinigung eingesetzt werden.

Die erfindungsgemäß hergestellten Substrate mit photokatalytischer Schicht eignen sich für die verschiedensten Anwendungen für antimikrobielle Zwecke und/oder zur Selbstreinigung, z.B. für Maschinen, Anstriche, Lacke, Möbel, Fassaden, Dächer, Textilien, Fahrzeuge, Signalanlagen, Folien, Schutz- und Trennwände, Verkehrstechnik, Automobile, Luft- und Schienenfahrzeuge, Fenster, Türen, Gewächshäuser, Mauern, Fliesen, Fußböden, Zelte, Planen, Außenanlagen, Zäune, Natursteine, Beton, Putze, Pflaster, Bodenplatten, Denkmäler, Hölzer, Platten, Verkleidungen, Fensterrahmen, Textilien, Abdeckungen, Beton, Kunststoffoberflächen aller Art, Kunststoffverscheibungen, Helme, Visiere, Gehäuse, Außenanlagen, Gerätschaften aller Art, z.B. medizinische Geräte, Haushaltsgeräte, Verkehrsschilder, Stahlkonstruktionen und Stahlfassaden. Die Schichten eignen sich auch als Antibeschlagsschichten, z.B. auf Glas, Spiegeln, Verkleidungen oder Abtrennungen. Ferner können magnetische, beispielsweise superparamagnetische, Partikel beschichtet werden.

Ein besonderer Anwendungsbereich ist die Sterilisation bzw. der Schutz von Instrumenten aller Art, und insbesondere von medizinischen, einschließlich tier- und zahnmedizinischen Geräten und Geräten des Sanitärbereichs, gegen Verschmutzung, z.B. durch infektiöse Substanzen wie Prionen (z.B. für die BSE-Bekämpfung). Wichtige weitere Anwendungsgebiete sind Lebensmitteltechnologie und Milchwirtschaft.

### Beispiele

Es werden folgende Abkürzungen verwendet:
- TEOS:: Tetraethoxysilan
- FTS:: (3,3,4,4,5,5,6,6,7,7,8,8,8-Tridecafluoroctyl)triethoxysilan
- GPTS:: (3-Glycidyloxypropyl)trimethoxysilan
- HDTMS:: Hexadecyltrimethoxysilan

### Beispiel 1

### Hydrothermale Herstellung von TiO₂ (Anatas)

9,6 g (0,034 Mol) Titanisopropylat (Ti(OⁱPr)₄) werden zu 14,5 g n-Propanol gegeben und nach 5 min Rühren bei Raumtemperatur mit 0,67 g (0,0068 Mol) 37% HCl versetzt. Nach 20 min werden 0,712 g (0,063 Mol) Wasser unter intensivem Rühren zugegeben.

Die Mischung wird anschließend mit 41,9 g n-Propanol verdünnt, worauf man bei 250°C und 200 bar Druck 7 h lang behandelt. Der entstandene Anatas wird abzentrifugiert und bei 50°C und 10 mbar getrocknet.

### Beispiel 2

### Hydrothermale Herstellung von dotiertem TiO₂ (Anatas, Dotierungsmittel Sn(CH₃CO₂)₄)

9,6 g (0,034 Mol) Titanisopropylat (Ti(OⁱPr)₄) werden zu 14,5 g n-Propanol gegeben und nach 5 min Rühren bei Raumtemperatur mit 0,67 g (0,0068 Mol) 37% HCl versetzt. Nach 20 min werden 0,712 g (0,063 Mol) Wasser unter intensivem Rühren zugegeben.

Die Mischung wird anschließend mit 41,9 g n-Propanol verdünnt, worauf man die Mischung mit 0,635 g (0,0018 Mol) Sn(CH₃CO₂)₄ versetzt und bei 250°C und 200 bar Druck 7 h lang behandelt. Der entstandene Anatas wird abzentrifugiert und bei 50°C und 10 mbar getrocknet.

### Beispiel 3

### Hydrothermale Herstellung von dotiertem TiO₂ (Anatas, Dotierungsmittel WO₃)

9,6 g (0,034 Mol) Titanisopropylat (Ti(OⁱPr)₄) werden zu 14,5 g n-Propanol gegeben und nach 5 min Rühren bei Raumtemperatur mit 0,67 g (0,0068 Mol) 37% HCl versetzt. Nach 20 min werden 0,712 g (0,063 Mol) Wasser unter intensivem Rühren zugegeben.

Die Mischung wird anschließend mit 41,9 g n-Propanol verdünnt, worauf man die Mischung mit 0,039 g (0,00017 Mol) WO₃ versetzt und bei 250°C und 200 bar Druck 7 h lang behandelt. Der entstandene Anatas wird abzentrifugiert und bei 50°C und 10 mbar getrocknet.

### Beispiel 4

### Oberflächenmodifizierung von TiO₂ (Anatas)-Pulver mit FTS

Von den nach den Beispielen 1 bis 3 hergestellten TiO₂-Pulvern wird jeweils 1,0 g mit 8,67 g Toluol verrührt und dann mit 0,077 g FTS versetzt. Nach 2stündigem Rühren wird das Toluol in einem Rotationsverdampfer abgetrennt.

### Beispiel 5

### Oberflächenmodifizierung von TiO₂ (Anatas)-Pulver mit HDTMS

Von den nach den Beispielen 1 bis 3 hergestellten TiO₂-Pulvern werden jeweils 1,0 g mit 8,67 g Toluol verrührt und dann mit 0,312 g HDTMS versetzt. Nach 2stündigem Rühren wird das Toluol in einem Rotationsverdampfer abgetrennt.

### Beispiel 6

### Herstellung einer photokatalytischen Schicht mit undotiertem TiO₂

Zur Herstellung eines GPTS-Hydrolysats werden 23,6 g (0.1 mol) GPTS mit 5,4 g (0.3 mol) Wasser versetzt. Das Gemisch wird anschließend über Nacht beim Raumtemperatur gerührt.

0,05 g von dem nach Beispiel 4 hergestellten FTS-modifizierten, undotierten TiO₂₋Pulver werden in 1,56 g MEK (Methylethylketon) dispergiert und dann mit 0,44 g Formamid versetzt. Die erhaltene Dispersion wird unter Rühren mit 4,14 g des hergestellten GPTS-Hydrolysats vermischt.

Die erhaltene Beschichtungszusammensetzung wird mittels einer Schleuderbeschichtungsvorrichtung (Spincoater) mit 1000 U/min auf Polycarbonat-Platten (PC-Platten) von 10 cm x 10 cm aufgetragen. Anschließend werden die Platten bei 128°C 1 h gehärtet. Die Schichtdicken betragen 2 bis 3 µm. Der Kontaktwinkel der erhaltenen Schichten gegen Wasser beträgt 101°.

Die beschichteten PC-Platten werden 4 min mit einer Xenonlampe (750 W) bestrahlt. Nach der Bestrahlung betrug der Kontaktwinkel der PC-Platten gegen Wasser nur noch 10°.

Zur Bestimmung der photokatalytischen Aktivität der erhaltenen PC-Platten wird die zeitliche Änderung der Lichtabsorption bei 553 nm von einer Rhodamin B-Lösung bestimmt. Hierfür werden 20 ml einer wässrigen Rhodamin B-Lösung (Konzentration 6 ppm) mit der PC-Platte in Kontakt gebracht, die mit einer Xenonlampe (750 W) bestrahlt wird. Die Absorption der Rhodamin B-Lösung bei 553 nm wird in Intervallen gemessen, um den Abbau von Rhodamin B zu verfolgen. Nach ca. einer Stunde ist das gesamte Rhodamin B abgebaut.

### Beispiel 7

### Herstellung einer photokatalytischen Schicht mit Sn-dotiertem TiO₂

0,05 g von dem nach Beispiel 5 hergestellten HDTMS-modifizierten, Sn-dotierten TiO₂-Pulver werden in 1,56 g Petrolether dispergiert und dann mit 0,44 g Formamid versetzt. Die erhaltene Dispersion wird unter Rühren mit 4,14 g des wie in Beispiel 6 hergestellten GPTS-Hydrolysats vermischt.

Die erhaltene Beschichtungszusammensetzung wird mittels einer Schleuderbeschichtungsvorrichtung (Spincoater) mit 1000 U/min auf Polycarbonat-Platten (PC-Platten) von 10 cm x 10 cm aufgetragen. Anschließend werden die Platten bei 128°C 1 h gehärtet. Die Schichtdicken betragen 2 bis 3 µm. Der Kontaktwinkel der erhaltenen Schichten gegen Wasser beträgt 92°.

Die beschichteten PC-Platten werden 4 min mit einer Xenonlampe (750 W) bestrahlt. Nach der Bestrahlung betrug der Kontaktwinkel der PC-Platten gegen Wasser weniger als 10°.

Die photokatalytischen Aktivität der erhaltenen PC-Platten wird nach dem gleichen Versuchsaufbau wie in Beispiel 6 durch Bestimmung der Lichtabsorption bei 553 nm von einer Rhodamin B-Lösung bestimmt. Das gesamte Rhodamin B ist nach etwa 35 min abgebaut.

### Beispiel 8

### Herstellung von photokatalytischen Schichten mit TEOS-Hydrolysat

Zur Herstellung eines TEOS-Hydrolysats werden 12,36 g (0,0594 Mol) TEOS in 15,96 g Ethanol mit 9,06 g Wasser versetzt. Hierauf werden unter Rühren 0,2 g konzentrierte (37%) HCl zugegeben. Nach 1 h Rühren werden 0,28 g GPTS zugesetzt und bei Raumtemperatur über Nacht gerührt. Man erhält ein TEOS-Hydrolysat mit 2 Mol-% GPTS.

Von den in Beispiel 4 hergestellten FTS-modifizierten TiO₂-Pulvern (undotiert, mit Sn dotiert und mit W dotiert) werden jeweils eine 2,5-gewichtsprozentige Lösung in Methylethylketon hergestellt und mit 0,2 g des hergestellten TEOS-Hydrolysats, das 2 Mol-% GPTS enthält (Molverhältnis Ti:Si = 10:5), vermischt.

Die erhaltene Beschichtungszusammensetzung wird mittels einer Schleuderbeschichtungsvorrichtung auf Polycarbonat-Platten (PC-Platten) von 10 cm x 10 cm aufgetragen. Anschließend werden die Platten bei 128°C 1 h gehärtet.

### Beispiel 9

### Bestimmung der photokatalytischen Aktivität von Schichten mit dotiertem TiO₂

Zur Bestimmung der photokatalytischen Aktivität werden Schichten mit dotiertem TiO₂ untersucht. Hierfür werden Sn-dotierte TiO₂-Pulver (Sn(IV)), W-dotierte TiO₂₋Pulver (W(VI)), Fe-dotierte TiO₂-Pulver (Fe(III)) und In-dotierte TiO₂-Pulver (In(III)) in unterschiedlichen Verhältnissen von Ti zu Dotierungsmetall verwendet.

Die Sn- und W-dotierten TiO₂-Pulver werden entsprechend den Beispielen 2 und 3 mit Sn(CH₃CO₂)₄ und WO₃ hergestellt, wobei die Einsatzmengen entsprechend dem gewünschten Verhältnis Ti zu Dotierungsmittel (0,5 bis 10 Mol-% Dotierungsmittel) variiert werden. In analoger Weise werden dotierte TiO₂-Pulver mit FeCl₃ und In₂O₃ hergestellt. Zum Vergleich wird auch jeweils unter den gleichen Bedingungen unmodifizierter Anatas hergestellt.

Von den hergestellten dotierten TiO₂-Pulvern werden jeweils eine 2,5-gewichtsprozentige Lösung in Methylethylketon hergestellt und mit 0,2 g von wie in Beispiel 8 hergestelltem TEOS-Hydrolysat, das 2 Mol-% GPTS enthält, vermischt.

Die erhaltene Beschichtungszusammensetzung wird mittels einer Schleuderbeschichtungsvorrichtung auf Polycarbonat-Platten (PC-Platten) aufgetragen. Die Platten werden bei 128°C 1 h gehärtet.

Die photokatalytische Aktivität wird wieder mit einer Rhodamin B-Lösung (6 ppm in H₂O) bestimmt. Die beschichteten Platten werden jeweils mit 20 ml der Rhodamin B-Lösung kontaktiert und dann 10 min mit UV-Licht bestrahlt. Danach wird die Absorption der Rhodamin B-Lösung bei 553 nm vermessen. Zum Vergleich werden auch auf gleiche Weise Messungen an Rhodamin B ohne Kontakt mit photokatalytischen Schichten und in Kontakt mit undotiertem Anatas durchgeführt. Die Ergebnisse sind in nachfolgender Tabelle aufgeführt. Daraus wird ersichtlich, das durch Dotierung teilweise deutliche schnellere Abbauraten erzielt werden können.

**Tabelle: Absorption bei 553 nm nach 10 min UV-Bestrahlung**

| | Dotierungsmittel | | | |
|---|---|---|---|---|
| Menge (Mol-%) | Fe(III) | W(VI) | Sn(IV) | In(III) |
| -^{*} | 1,46 | 1,42 | 1,08 | 1,07 |
| 0^{**} | 0,24 | 0,31 | 0,125 | 0,12 |
| 0,5 | 0,31 | 0,04 | 0,065 | 0,009 |
| 1,0 | 0,46 | 0,03 | 0,103 | -0,043 |
| 5 | 0,27 | 0,284 | -0,06 | 0,023 |
| 10 | 0,084 | 0,20 | -0,08 | 0,084 |

| | | | | |
|---|---|---|---|---|
| *Messung ohne photokatalytische Schicht **undotierter Anatas | | | | |

### Beispiel 10

### TiO₂-(Anatas)-Herstellung unter Rückfluss

Zu 29,02 g 1-Pentanol werden 19,2 g (0,068 Mol) Titanisopropylat (Ti(OⁱPr)₄) gegeben und nach 5 min. Rühren bei Raumtemperatur mit 1,33 g (0,0136 Mol) 37% HCl versetzt. Nach 20 min werden 1,42 g (0,079 Mol) Wasser unter intensivem Rühren rasch zugegeben und 20 min bei Raumtemperatur weiter gerührt. Die Mischung wird anschließend bei 132°C 16 h unter Rückfluss gekocht. Der entstandene Anatas wird abzentrifugiert und bei 50°C und 10mbar getrocknet.

### Oberflächenmodifizierung von Rückfluss-TiO₂ (Anatas)-Pulver mit TODS

Von dem vorstehend erhaltenen TiO₂-Pulver wird jeweils 1 g mit 4 g Wasser gerürht und dann mit 0,2 g TODS (Trioxadecansäure) versetzt. Nach 10 min. Ultraschallbehandlung erhält man eine transparente Lösung.

### Dispergierung von Rückfluss-TiO₂ (Anatas)-Pulver mit Toluol

Von dem vorstehend erhaltenen TiO₂-Pulver wird jeweils 1 g mit 1,5 g Toluol gerührt. Nach 1 min. Ultraschallbehandlung wird eine transparente Lösung erhalten.

## Patentansprüche

1. Verfahren zur Herstellung von photokatalytisch aktivem TiO₂, umfassend die Schritte
a) Herstellen einer Mischung umfassend mindestens eine hydrolysierbare Titanverbindung, ein organisches Lösungsmittel und Wasser in einer unterstöchiometrischen Menge, bezogen auf die hydrolysierbaren Gruppen der Titanverbindung,
b) Behandeln der sich ergebenden Mischung bei einer Temperatur von mindestens 60°C unter Bildung einer Dispersion oder eines Niederschlags von TiO₂-Teilchen und
c) Entfernen des Lösungsmittels unter Bildung eines Pulvers von TiO₂-Teilchen.

2. Verfahren nach Anspruch 1, **dadurch gekennzeichnet, dass** die Mischung in Schritt b) hydrothermal oder durch Erwärmen unter Rückfluss behandelt wird.

3. Verfahren nach Anspruch 1 oder Anspruch 2, **dadurch gekennzeichnet, dass** die Mischung in Schritt b) unter autogenem Druck behandelt wird.

4. Verfahren nach einem der Ansprüche 1 bis 3, **dadurch gekennzeichnet, dass** in Schritt a), bezogen auf 1 Mol hydrolysierbare Gruppen in der Titanverbindung, nicht mehr als 0,7 Mol Wasser zugegeben werden.

5. Verfahren nach einem der Ansprüche 1 bis 4, **dadurch gekennzeichnet, dass** in Schritt a) zusätzlich ein Dotiermittel zugegeben wird.

6. Verfahren nach einem der Ansprüche 1 bis 5, **dadurch gekennzeichnet, dass** die TiO₂-Teilchen mit einem Oberflächenmodifizierungsmittel gemischt werden, um eine Oberflächenmodifizierung der Teilchen zu bewirken.

7. Verfahren nach Anspruch 6, **dadurch gekennzeichnet, dass** das Oberflächenmodifizierungsmittel mindestens eine hydrophobe Gruppe enthält.

8. Verfahren nach Anspruch 6 oder Anspruch 7, **dadurch gekennzeichnet, dass** die hydrophobe Gruppe mindestens ein Fluoratom aufweist und/oder eine langkettige aliphatische Kohlenwasserstoffgruppe oder eine aromatische Gruppe ist.

9. Verfahren nach einem der Ansprüche 6 bis 8, **dadurch gekennzeichnet, dass** das Oberflächenmodifizierungsmittel aus hydrolysierbaren Silanverbindungen, Carbonsäuren, Carbonsäurehalogeniden, Carbonsäureestern, Carbonsäureanhydriden, Oximen, β-Dicarbonylverbindungen, Alkoholen, Aminen, Alkylhalogeniden und deren Derivaten ausgewählt wird.

10. Agglomeratfreies, photokatalytisch aktives TiO₂ mit einer mittleren Teilchengröße (röntgenographisch ermitteltes Volumenmittel) ≤ 10 nm, erhältlich nach dem Verfahren eines der Ansprüche 1 bis 5.

11. Verfahren zur Herstellung eines Substrats mit einer photokatalytischen Schicht, umfassend die Schritte
a) Herstellen einer Mischung umfassend mindestens eine hydrolysierbare Titanverbindung, ein organisches Lösungsmittel und Wasser in einer unterstöchiometrischen Menge, bezogen auf die hydrolysierbaren Gruppen der Titanverbindung,
b) Behandeln der sich ergebenden Mischung bei einer Temperatur von mindestens 60°C unter Bildung einer Dispersion oder eines Niederschlags von TiO₂-Teilchen,
c) gegebenenfalls Lösungsmittelaustausch durch Entfernen des Lösungsmittels unter Bildung eines Pulvers von TiO₂-Teilchen und Zugabe eines anderen Lösungsmittels unter Bildung einer Dispersion von TiO₂-Teilchen,
d) Auftragen der Dispersion auf das Substrat und
e) Wärmebehandlung der aufgetragenen Dispersion unter Bildung einer photokatalytischen Schicht.

12. Verfahren nach Anspruch 11, **dadurch gekennzeichnet, dass** die Mischung in Schritt b) hydrothermal oder durch Erwärmen unter Rückfluss behandelt wird.

13. Verfahren nach Anspruch 11 oder 12, **dadurch gekennzeichnet, dass** in Schritt a), bezogen auf 1 Mol hydrolysierbare Gruppen in der Titanverbindung, nicht mehr als 0,7 Mol Wasser zugegeben werden.

14. Verfahren nach einem der Ansprüche 11 bis 13, **dadurch gekennzeichnet, dass** in Schritt a) zusätzlich ein Dotiermittel zugegeben wird.

15. Verfahren nach einem der Ansprüche 11 bis 14, **dadurch gekennzeichnet, dass** die TiO₂-Teilchen mit einem Oberflächenmodifizierungsmittel gemischt werden, um eine Oberflächenmodifizierung der Teilchen zu bewirken.

16. Verfahren nach einem der Ansprüche 11 bis 15, **dadurch gekennzeichnet, dass** der nach Schritt b) oder c) erhaltenen Dispersion ein anorganisches oder organisch modifiziertes matrixbildendes Material zugegeben wird.

17. Verfahren nach einem der Ansprüche 11 bis 16, **dadurch gekennzeichnet, dass** die erhaltene Schicht durch Bestrahlung aktiviert wird.

18. Verfahren nach einem der Ansprüche 11 bis 17, **dadurch gekennzeichnet, dass** zwischen der photokatalytischen Schicht und dem Substrat eine anorganische Schicht angeordnet wird.

19. Verfahren nach einem der Ansprüche 11 bis 17, **dadurch gekennzeichnet, dass** zwischen der photokatalytischen Schicht und dem Substrat eine Hybridschicht aus einem organisch modifizierten anorganischen Material vorgesehen wird.

20. Verfahren nach einem der Ansprüche 11 bis 19, **dadurch gekennzeichnet, dass** unter der photokatalytischen Schicht eine elektrisch leitfähige Unterlage verwendet wird.

21. Substrat mit einer photokatalytischen Schicht, erhältlich nach dem Verfahren eines der Ansprüche 11 bis 20.

22. Verwendung eines Substrats mit einer photokatalytischen Schicht nach Anspruch 21 als selbstreinigendes Substrat oder als mit Hilfe von Bestrahlung zu reinigendes Substrat.

23. Verwendung nach Anspruch 22 zum Schutz von im medizinischen oder hygienischen Bereich gebrauchten Gegenständen.

## Claims

1. A process for preparing photo catalytically active TiO₂, comprising the steps of
a) preparing a mixture comprising at least one hydrolyzable titanium compound, an organic solvent and water in a substoichiometric amount based on the hydrolyzable groups of the titanium compound,
b) treating the resulting mixture at a temperature of at least 60°C to form a dispersion or a precipitate of TiO₂ particles and
c) removing the solvent to form a powder of TiO₂ particles.

2. The process as claimed in claim 1, **characterized in that** the mixture is treated in step b) hydrothermally or by heating under reflux.

3. The process as claimed in claim 1 or 2, **characterized in that** the mixture is treated in step b) under autogenous pressure.

4. The process as claimed in one of claims 1 to 3, **characterized in that** not more than 0.7 mol of water is added in step a) based on 1 mol of hydrolyzable groups in the titanium compound.

5. The process as claimed in one of claims 1 to 4, **characterized in that** a dopant is additionally added in step a).

6. The process as claimed in one of claims 1 to 5, **characterized in that** the TiO₂ particles are mixed with a surface modifier to carry out a surface modification of the particles.

7. The process as claimed in claim 6, **characterized in that** the surface modifier contains at least one hydrophobic group.

8. The process as claimed in claim 6 or 7, **characterized in that** the hydrophobic group has at least one fluorine atom and/or is a long-chain aliphatic hydrocarbon group or an aromatic group.

9. The process as claimed in one of claims 6 to 8, **characterized in that** the surface modifier is selected from hydrolyzable silane compounds, carboxylic acids, carbonyl halides, carboxylic esters, carboxylic anhydrides, oximes, β-dicarbonyl compounds, alcohols, amines, alkyl halides and derivatives thereof.

10. Agglomerate-free, photocatalytically active TiO₂ having an average particle size (X-ray-determined volume average) of ≤ 10 nm, obtainable by the process as claimed in one of claims 1 to 5.

11. A process for producing a substrate having a photocatalytic layer, comprising the steps of
a) preparing a mixture comprising at least one hydrolyzable titanium compound, an organic solvent and water in a substoichiometric amount, based on the hydrolyzable groups of the titanium compound,
b) treating the resulting mixture at a temperature of at least 60°C to form a dispersion or a precipitate of TiO₂ particles,
c) optionally exchanging the solvent by removing the solvent to form a powder of TiO₂ particles and adding another solvent to form a dispersion of TiO₂ particles,
d) applying the dispersion to the substrate and e) heat-treating the applied dispersion to form a photocatalytic layer.

12. The process as claimed in claim 11, **characterized in that** the mixture is treated in step b) hydrothermally or by heating under reflux.

13. The process as claimed in claim 11 or 12, **characterized in that** not more than 0.7 mol of water is added in step a) based on 1 mol of hydrolyzable groups in the titanium compound.

14. The process as claimed in one of claims 11 to 13, **characterized in that** a dopant is additionally added in step a).

15. The process as claimed in one of claims 11 to 14, **characterized in that** the TiO₂ particles are mixed with a surface modifier to carry out a surface modification of the particles.

16. The process as claimed in one of claims 11 to 15, **characterized in that** an inorganic or organically modified matrix-forming material is added to the dispersion obtained after step b) or c).

17. The process as claimed in one of claims 11 to 17, **characterized in that** the layer obtained is activated by irradiation.

18. The process as claimed in one of claims 11 to 17, **characterized in that** between the photocatalytic layer and substrate an inorganic layer is arranged.

19. The process as claimed in one of claims 11 to 17, **characterized in that** between the photocatalytic layer and substrate a hybrid layer of an organically modified inorganic material is provided.

20. The process as claimed in one of claims 11 to 19, **characterized in that** an electrically conductive sublayer is used below the photocatalytic layer.

21. A substrate having a photocatalytic layer, obtainable by the process of one of claims 11 to 20.

22. The use of a substrate having a photocatalytic layer as claimed in claim 21 as a self-cleaning substrate or as a substrate which can be cleaned with the aid of irradiation.

23. The use as claimed in claim 22 for the protection of objects used in the medical or hygiene sector.

## Revendications

1. Procédé de préparation de TiO₂ à activité photocatalytique, comprenant les étapes de
a) préparation d'un mélange comprenant au moins un composé du titane hydrolysable, un solvant organique et de l'eau, en une quantité inférieure à la quantité stoechiométrique par rapport aux groupes hydrolysables du composé du titane,
b) traitement du mélange ainsi obtenu, à une température d'au moins 60°C, avec formation d'une dispersion ou d'un précipité de particules de TiO₂, et
c) élimination du solvant, avec formation d'une poudre de particules de TiO₂.

2. Procédé selon la revendication 1, **caractérisé en ce que** le mélange de l'étape b) est traité par voie hydrothermique ou par chauffage au reflux.

3. Procédé selon la revendication 1 ou 2, **caractérisé en ce que** le mélange de l'étape b) est traité sous la pression spontanée.

4. Procédé selon l'une des revendications 1 à 3, **caractérisé en ce que** dans l'étape a) on n'ajoute pas plus de 0,7 mole d'eau par mole de groupes hydrolysables du composé du titane.

5. Procédé selon l'une des revendications 1 à 4, **caractérisé en ce que** dans l'étape a) on ajoute encore un dopant.

6. Procédé selon l'une des revendications 1 à 5, **caractérisé en ce que** les particules de TiO₂ sont mélangées à un agent modifiant en surface, pour réaliser une modification de la surface des particules.

7. Procédé selon la revendication 6, **caractérisé en ce que** l'agent modifiant en surface contient au moins un groupe hydrophobe.

8. Procédé selon la revendication 6 ou 7, **caractérisé en ce que** le groupe hydrophobe comprend au moins un atome de fluor et/ou un groupe hydrocarboné aliphatique à longue chaîne ou un groupe aromatique.

9. Procédé selon l'une des revendications 6 à 8, **caractérisé en ce que** l'agent modifiant en surface est choisi parmi les composés du silane hydrolysables, les acides carboxyliques, les halogénures de carbonyle, les esters d'acides carboxyliques, les anhydrides carboxyliques, les oximes, les composés β-dicarbonylés, les alcools, les amines, les halogénures d'alkyle et les dérivés de ceux-ci.

10. TiO₂ sans agglomérat, à activité photocatalytique, ayant une granulométrie moyenne (moyenne en volume déterminée aux rayons X) ≤ 10 nm, pouvant être obtenu par le procédé selon l'une des revendications 1 à 5.

11. Procédé de préparation d'un substrat comportant une couche photocatalytique, comprenant les étapes de
a) préparation d'un mélange comprenant au moins un composé du titane hydrolysable, un solvant organique et de l'eau en une quantité inférieure à la quantité stoechiométrique par rapport aux groupes hydrolysables du composé du titane,
b) traitement du mélange ainsi obtenu à une température d'au moins 60°C avec formation d'une dispersion ou d'un précipité de particules de TiO₂,
c) éventuellement, échange de solvants par élimination du solvant avec formation d'une poudre de particules de TiO₂ et addition d'un autre solvant avec formation d'une dispersion de particules de TiO₂,
d) application de la dispersion sur le substrat, et
e) traitement thermique de la dispersion appliquée, avec formation d'une couche photocatalytique.

12. Procédé selon la revendication 11, **caractérisé en ce que** le mélange de l'étape b) est traité par voie hydrothermique ou par chauffage au reflux.

13. Procédé selon la revendication 11 ou 12, **caractérisé en ce que** dans l'étape a) on n'ajoute pas plus de 0,7 mole d'eau par mole de groupes hydrolysables du composé du titane.

14. Procédé selon l'une des revendications 11 à 13, **caractérisé en ce que** dans l'étape a) ou ajoute en outre un dopant.

15. Procédé selon l'une des revendications 11 à 14, **caractérisé en ce que** les particules de TiO₂ sont mélangées à un agent modifiant en surface, pour provoquer une modification de la surface des particules.

16. Procédé selon l'une des revendications 11 à 15, **caractérisé en ce qu'**à la dispersion obtenue après l'étape b) ou c) on ajoute un matériau formant une matrice, inorganique ou ayant subi une modification organique.

17. Procédé selon l'une des revendications 11 à 16, **caractérisé en ce que** la couche obtenue est activée par un rayonnement.

18. Procédé selon l'une des revendications 11 à 17, **caractérisé en ce qu'**une couche inorganique est disposée entre la couche photocatalytique et le substrat.

19. Procédé selon l'une des revendications 11 à 17, **caractérisé en ce qu'**une couche hybride, en un matériau inorganique à modification organique, est prévue entre la couche photocatalytique et le substrat.

20. Procédé selon l'une des revendications 11 à 19, **caractérisé en ce qu'**une sous-couche conductrice de l'électricité est utilisée en dessous de la couche photocatalytique.

21. Substrat comportant une couche photocatalytique, pouvant être obtenue par le procédé selon l'une des revendications 11 à 20.

22. Utilisation d'un substrat comportant une couche photocatalytique selon la revendication 21 en tant que substrat autonettoyant ou substrat destiné à être nettoyé à l'aide d'un rayonnement.

23. Utilisation selon la revendication 22 pour la protection d'objets utilisés dans le domaine médical ou hygiénique.
